# EUROPEAN PATENT SPECIFICATION

(11) **EP 1 299 675 B1**
(45) Date of publication and mention of the grant of the patent: **02.11.2005**
(21) Application number: 01917459.8
(22) Date of filing: 08.03.2001
(51) Int. Cl.: F23N 5/10, F16K 31/524

(54) **REMOTE-CONTROL DEVICE FOR GAS COCKS**
FERNBEDIENUNGSVORRICHTUNG FÜR GASHÄHNE
DISPOSITIF DE COMMANDE A DISTANCE POUR ROBINETS DE GAZ

(30) Priority: 13.07.2000 IT MI001581; 03.10.2000 IT MI002132
(43) Date of publication of application: 09.04.2003
(73) Proprietor: SABAF S.p.A., 25035 Ospitaletto (BS) (IT)
(72) Inventor: BETTINZOLI, Angelo, I-25062 Concesio (IT)
(74) Representative: Valentini, Giuliano
(86) International application number: PCT/IT2001/000114
(87) International publication number: WO 2002/006731

(56) References cited:
- EP-A- 0 805 310
- EP-A- 1 001 219

## Description

### TECHNICAL FIELD OF THE INVENTION

The present invention relates in general to a device for manoeuvring a cock designed for shutting off and regulating gas that is supplied to a burning apparatus and, in particular, a device that enables remote control of the cock.

### BACKGROUND ART

The above devices find application, for example, in gas cookers and cooktops in which, associated to each burner, there is a cock that enables the shutting-off and regulation of the gas. In more recent devices, manual control of the cock also enables activation of one or more auxiliary members designed to control proper operation of the apparatus during the lighting and/or operating steps.

For example, pressure on the control knob of the gas cock in a pre-set position may activate a lighter which generates a spark on the respective burner to start combustion of the gas.

In the same way, pressure on the control knob may also enable activation of safety devices that are able to interrupt flow of gas in the event of accidental extinction of the flame on the corresponding gas bumer.

Generally, cocks that equip a cooktop are arranged underneath the cooktop itself, alongside the area comprising the burners, and each knob is mounted directly on the control stem of the respective cock.

In some cases, it is necessary to arrange the cocks beneath the cooktop but in an area corresponding to that of the burners, with the cocks connected to a single common gas-supply pipe. This arrangement may be determined by particular design needs or styling requirements.

Irrespective of the reasons that determine such an arrangement, this inevitably means that the control knob of each cock cannot be mounted directly on the control stem of the cock itself, but must be set in a position that is at a distance therefrom and is not aligned therewith. It is therefore difficult, if not impossible, to impart an axial movement on the control stem of the cock, and hence operate any auxiliary member that may be associated to the cock itself according to the modalities described above, namely by exerting a simple pressure on the knob. It is therefore necessary to impart an axial movement on the control stem of the cock by means of a further rotation of the knob.

An embodiment is currently known in which the axial movement of the control stem of the cock is obtained by means of a pin, integral with the control stem and provided with an end that slides on an inclined surface made inside the cap of the cock. A spring is used to bring the pin back to the base of the inclined surface after burning has been started on the corresponding burner.

In this known embodiment, in order to obtain an axial travel sufficient for operation of any auxiliary member by means of a limited rotation of the remote knob, the inclination of the surface on which the pin slides must be very accentuated since the inclined surface develops inside the cap, i.e., inside an element which has a particularly small diameter. This inevitably entails a high effort for operating the knob.

In addition, in this known embodiment, the rotation imparted on the control stem to cause its axial movement also constrains the shutter member in rotation.

Due to the connection between the stem and the shutter member, in the event of stiffening or jamming of the shutter member, the control stem might get stuck in the depressed position. This could prevent deactivation of the lighter at the end of the gas-lighting step, or, even worse, prevent activation of the safety devices associated to the cock.

For example, EP-A1-1001219 discloses a gas-valve assembly wherein the valve body of the safety valve is displaceable axially by means of an actuator including a cam with a spiral cam surface and a cam follower riding on the cam surface. The cam follower is coupled to the actuating knob and acts to displace axially the safety-valve body upon rotation of the knob about its axis.

From EP-A1-0805310 it is known a gas tap having a mechanism for converting the rotation of the operating shaft in an axial displacement of the operating shaft. A retractable dowel radially protruding from the shaft is guided along ramps for axial displacement of the shaft when the same is rotated in one direction, while rotation in the opposite direction causes the radial retraction of the dowel guided along another ramp without axial displacement of the operating shaft.

### DISCLOSURE OF THE INVENTION

The object of the present invention is to solve the above-mentioned problems of the prior art by proposing a manoeuvring device in which the axial translation of the cock control stem may be performed by rotation of a remote knob in a way that is more reliable than is available in the prior art.

Another object of the present invention is to propose a device of the type mentioned above in which the rotation of the knob to obtain the movement of axial translation of the control stem does not require rotation of the cock shutter member.

A further object of the present invention is to propose a device of the type mentioned above in which rotation of the knob to obtain the movement of axial translation of the cock control stem requires an effort of operation that is smaller than that required for devices of a known type.

Yet another object of the present invention is to propose a device of the type referred to above in which regulation of gas flow through the cock and operation of the auxiliary members associated to the cock can be controlled in a perfectly regular and synchronized way.

These objects are achieved according to the present invention thanks to a device according to claim 1.

The use of a pair of elements external to the cock and provided with at least two cam surfaces having conjugated and opposed profiles provides various advantages. First of all, it is possible to prevent the shutter member from being driven in rotation when the stem translates in the axial direction, thus preventing any danger deriving from a possible jamming of the shutter member in the cock.

In addition, this enables the cam surfaces to be made on elements of larger diameter as compared to the prior art, so reducing the slope of the surfaces and, consequently, the effort necessary for imparting the axial movement on the control stem by rotating the knob.

According to a possible embodiment of the invention, the device advantageously comprises means for preventing axial sliding of the first element while it is driven in rotation by the second element, as well as for enabling axial sliding of the first element with respect to the second element in at least one pre-set position. This enables a regular operation of the device to be obtained, in particular during the gas-lighting step.

In fact, the control stem can be turned between a plurality of positions comprising at least one first position in which the shutter member completely obstructs the flow of gas through the cock, at least one second position in which the shutter member determines a pre-set minimum flow of gas, and at least one third position in which the shutter member determines a pre-set maximum flow of gas. It is only in this third position that the auxiliary lighting member is to be operated.

According to another possible embodiment of the invention, means are provided for making a desmodromic mechanism of axial translation between the first element and the second element. In this way, perfect synchronization is maintained between the reciprocal movement of translation of the two cam elements during the lighting step, above all when the first element, and hence the cock control stem, moves back after the gas has been lit.

### BRIEF DESCRIPTION OF THE DRAWINGS

The invention will be described below with reference to the attached schematic drawings, which are provided by way of example, and in which:
- Figures 1A-1D are sectional views that, by way of example, illustrate the operation of a cock of the type that can be actuated by a manoeuvring device according to the present invention;
- Figure 2 is an elevation view of some elements of the manoeuvring device according to the present invention with some elements of a cock in the closed position;
- Figure 3 is an enlarged perspective view of one part of the device according to the present invention;
- Figure 4 is an enlarged perspective view of a detail of a device according to the present invention;
- Figure 5 is a perspective elevation view of some elements in the device according to the invention and of some elements of the cock of Figure 2, with the cock in the position of maximum gas flow and with the cock control stem axially translated;
- Figure 6 is an enlarged perspective view of a detail of the cock that can be operated by a manoeuvring device according to the present invention;
- Figure 7 is a side view of an articulated rod of the manoeuvring device of the present invention for transmitting movement between a knob and a cock;
- Figure 8 is an exploded view of some items of the device according to a possible embodiment of the present invention;
- Figures 9 and 10 respectively illustrate a first element and a second element of a desmodromic mechanism according to another embodiment of the invention;
- Figure 11 A illustrates the elements of Figures 9 and 10 in the axially translated condition, i.e., the gas-lighting condition;
- Figure 11 B illustrates the elements of Figures 9 and 10 in the condition where they are connected together, i.e., the condition of normal regulation of gas flow;
- Figures 12 and 13 respectively illustrate a first element and a second element of a desmodromic mechanism according to a further embodiment of the invention;
- Figure 14A illustrates the elements of Figures 12 and 13 in the axially translated condition, i.e., the gas-lighting condition; and
- Figure 14B illustrates the elements of Figures 12 and 13 in the condition where they are connected together, i.e., the condition of normal regulation of gas flow.

### MODES FOR CARRYING OUT THE INVENTION

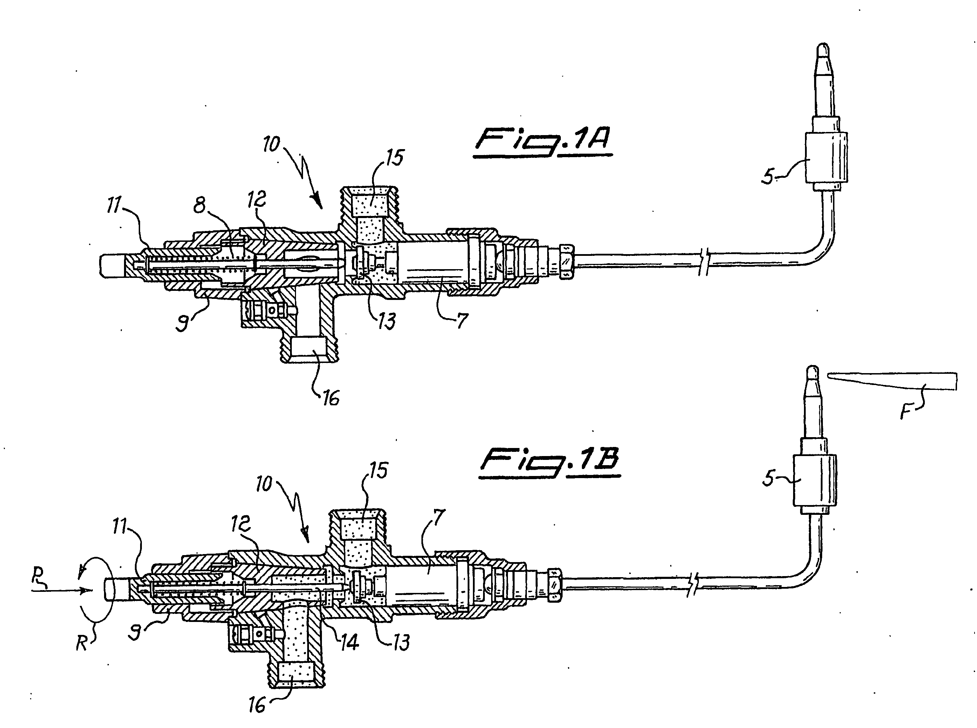

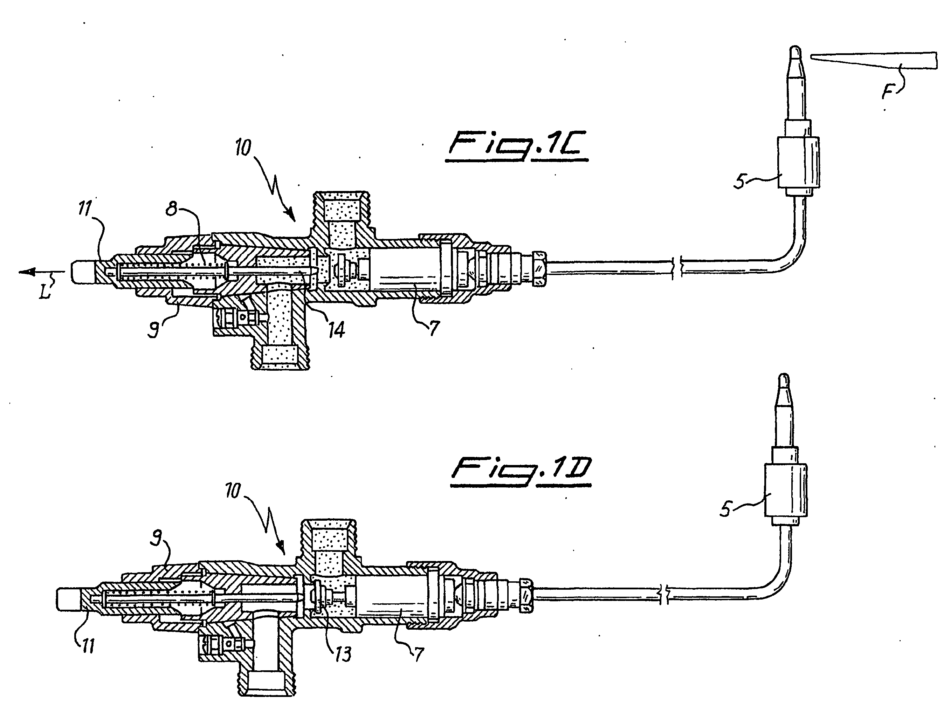

A gas cock 10 of the type that can be actuated by means of the manoeuvring device according to the present invention is illustrated, by way of example, in the schematic views of Figures 1A-1D, with an auxiliary member consisting of a safety device that enables gas flow to be interrupted in the event of accidental extinction of the flame. A cock that can be operated by means of the device according to the present invention may even be different from the one illustrated in Figures 1A-1D, for example as regards the gas inlet and output ports, or for example as regards the control sequence between the closing position and the minimum-flow and maximum-flow positions.

With reference to Figure 1A, in which the cock 10 is represented in the closed position, it is possible to distinguish the control stem 11, which acts on the shutter member 12 and on which a knob (not shown) is mounted. The cock 10 is closed at the top by a cap 9 mounted integral with the cock body, with respect to which the control stem 11 can translate along the longitudinal central axis of the cock and rotate with respect to the same axis.

The gas fed through the inlet port 15 is stopped before it reaches the shutter member 12 by the disk 13 of the safety valve, the disk 13 being sealingly abutted upon the respective valve seat under the action of elastic return means (not shown).

Figure 1 B shows the cock 10 during the step of lighting the gas at the bumer (not shown). The control stem 11 is rotated by means of the respective knob in the direction indicated by arrow R so as to bring the shutter member 12 into a position such as to enable a pre-set flow of gas to flow between the inlet port 15 and the outlet port 16. At the end of rotation, a pressure is exerted on the knob (arrow P) in such a way that the control stem 11 slides axially towards the inside of the cock 10. The control stem 11 in turn pushes a valve-pressing pin 14, the latter being mounted, so that it is integral and coaxial with the stem 11, in a blind hole of the latter in order to enable the disk 13 of the safety valve to be moved away from the seal seat, and consequently to set the inlet port 15 effectively in fluid communication with the outlet port 16.

Once lighting of the gas has taken place, the flame F acts on a sensitive element, for example a thermocouple 5, which is able to control an electromagnet 7**,** which in turn, being counteracted by elastic return means (not shown in the figure), withholds the disk 13 of the safety valve in a position such as to guarantee normal gas flow. The axial pressure in the direction of the arrow P on the control stem 11 must be maintained for the entire time necessary for enabling the thermocouple 5 to reach the temperature that enables sufficient energy to be produced to control the electromagnet 7.

Figure 1C illustrates the step of normal operation of the cock 10. At this point, after the electromagnet 7 controlled by the thermocouple 5 has been activated, it is possible to release the pressure on the knob. The control stem 11 and the valve-pressing pin 14 are brought back in the axial direction (arrow L) by means of a helical spring 8 which is coaxial to the control stem 11 and to the valve-pressing pin 14.

Figure 1D shows the condition in which there is accidental extinction of the flame. In this case, since the flame no longer laps the sensitive end of the thermocouple 5, after a certain period of time the thermocouple 5 is no longer able to supply sufficient energy to control the electromagnet 7. The disk 13 of the safety valve is thus brought back in abutment against the respective valve seat as a result of the aforesaid elastic return means, which come into action after the electromagnet 7 has been disabled.

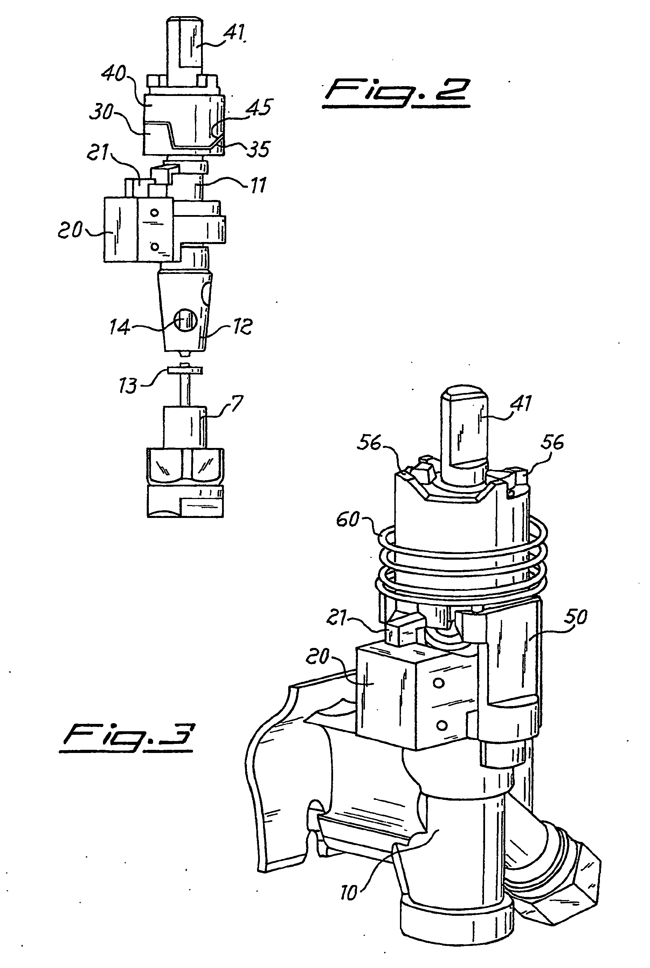

Some of the elements of the device according to the present invention are illustrated in Figure 2, where the following may be noted: the shutter member 12 of the cock, the disk 13 of the safety valve, the electromagnet 7, and the valve-pressing pin 14.

Partially visible in Figure 2 is moreover the control stem 11, to which there is coupled a finger 21 which enables operation of a switch 20 connected to the supply circuit of a spark-lighter or incandescent-lighter device (not shown) associated to the burning apparatus. The finger 21 is connected to the control stem 11 in such a way as to be driven in translation during the movement of axial translation of the stem itself and to enable in any case rotation of the stem 11 with respect to the finger. As a result, the microswitch will be closed, so activating the lighter device only when a pressure is exerted on the control stem 11.

In order to impart a movement of axial translation on the control stem 11 by applying a rotation on the knob, advantageously provided are at least one first element 30 having at least one first cam surface 35, and at least one second element 40 having at least one second cam surface 45. The cam surfaces 35 and 45 have conjugated and opposed profiles shaped and sized in such a way that the elements 30 and 40 are connected during the movement of rotation imparted by the knob on the control stem 11 for the entire rotational travel allowed for the shutter member 12. In Figure 2, as in Figure 5, only a single cam surface may be seen for each element. However, it is understood that the cam surfaces may also be more than one for each element, for example two diametrically opposed surfaces made on each element.

As will be explained hereinafter in greater detail, further rotation of the knob beyond the limit of angular range of the control stem 11 will cause rotation of the element 40 with respect to the element 30 and hence relative sliding between the respective cam surfaces 45 and 35. As a result, this causes axial sliding of the first element 30, together with the control stem 11, with respect to the second element 40.

According to the preferred embodiment, the cam surfaces 35 and 45 are substantially helical surfaces positioned on a diameter that enables a particularly favourable inclination of the helix to be obtained. Taking into account that the prior art envisages a single surface with a very high inclination, it may well be understood how the device according to the present invention can be operated with a markedly smaller effort and can thus guarantee a more reliable operation.

The first element 30 is mounted on the control stem 11 so that it is integral therewith, with the first cam surface 35 set on the side opposite to the one on which it is mounted on the stem 11, and the second element 40 comprises at least one control shaft 41 having a protruding end shaped in a way substantially similar to that of the cock control stem 11.

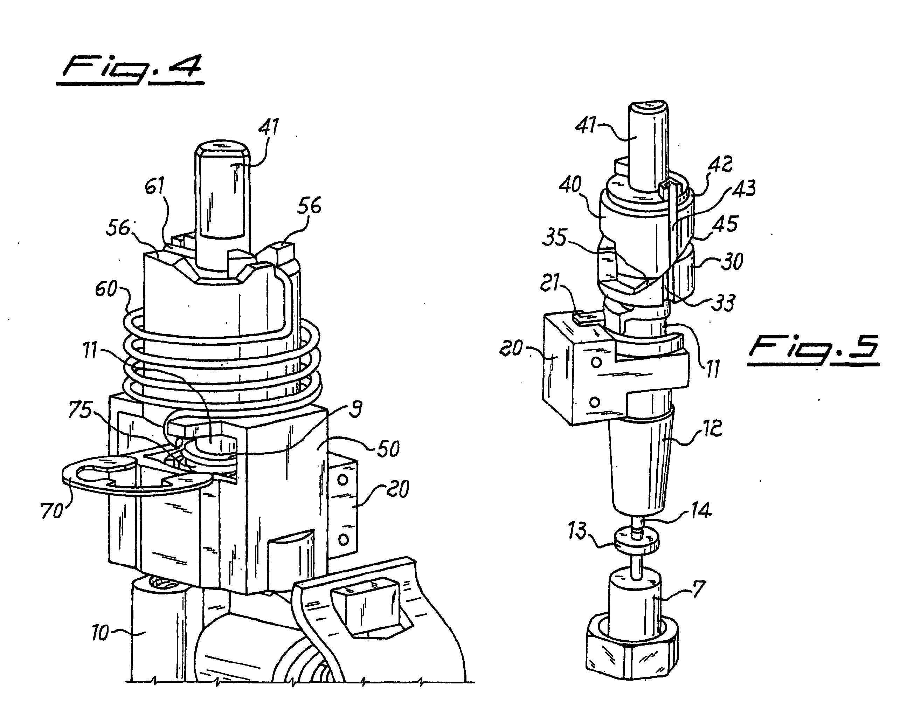

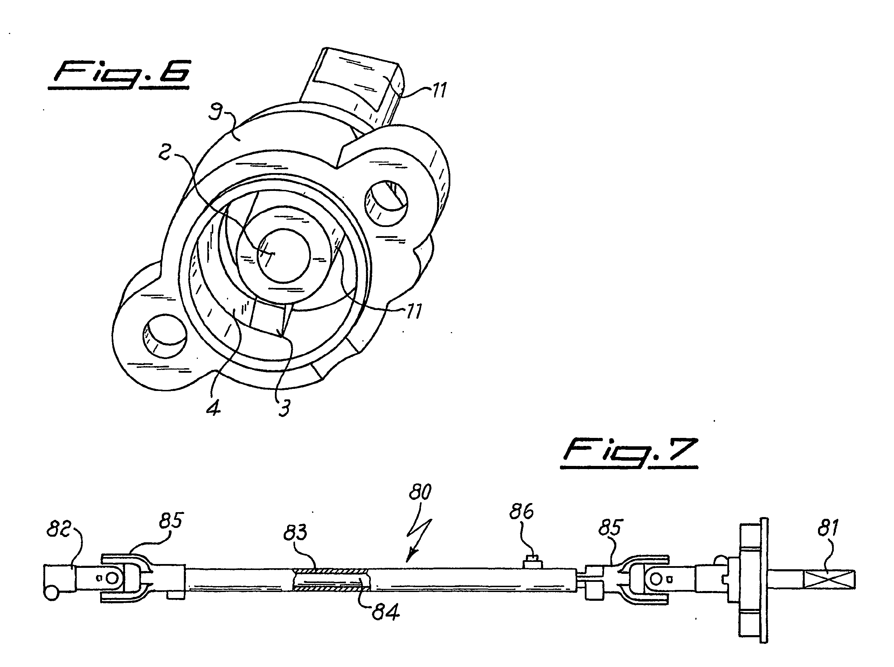

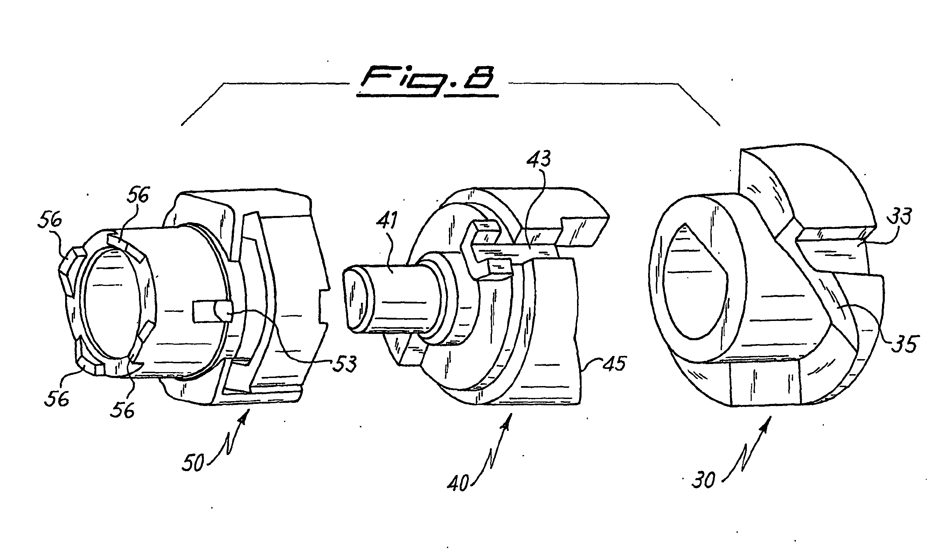

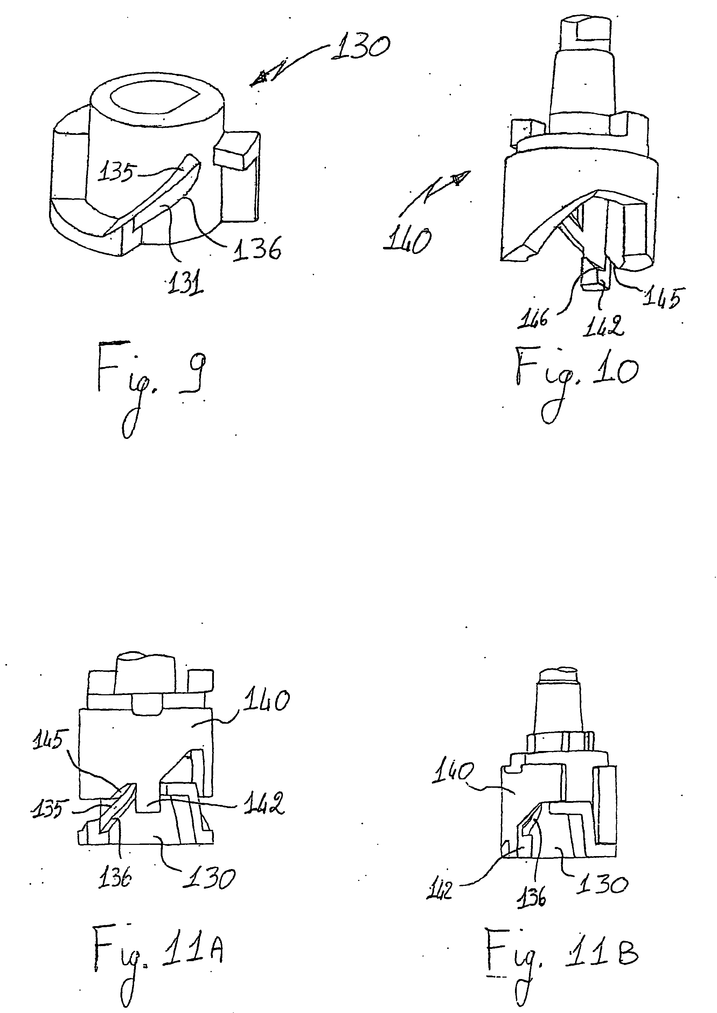

With reference now also to Figures 3 and 4, the device according to the invention comprises a casing 50 which is mounted on the cock 10 and houses the first element 30 and the second element 40, with the shaft 41 protruding from the casing 50 and with an annular abutting portion 42 (Figure 5) which rests against the inner surface of the casing 50. The second cam surface 45 of the second element 40 is set on the side opposite to the one comprising the control shaft 41 and the abutting portion 42.

A spring 60 is provided that enables return of the knob into the maximum gas-flow position after further rotation of the knob beyond the said position has been imparted to cause translation of one of the elements with respect to the other. Preferably provided on the casing 50 are also stop projections 56 upon which a pair of portions 61 (Figure 4) of the spring 60 abut in order to limit the rotational range of the knob beyond the aforesaid third position.

With particular reference to Figure 4, the casing 50 is mounted on the cock 10 by blocking means, which prevent axial movement of the former with respect to the latter. In the embodiment illustrated in Figure 4, the blocking means comprise an elastic ring 70 of the Seeger type which is inserted under pressure in a groove 75 of the cap 9 in such a way as to make it integral with the cap and with the body of the cock, whilst the control stem 11 (partially visible in Figure 4) is free to rotate and to translate with respect to the casing 50, the cap 9, and the body of the cock 10.

In the embodiment here illustrated, the control stem 11 is able to turn, together with the shutter member 12, within a pre-set arc of rotation which comprises in sequence: a first position, where the shutter member 12 obstructs completely the flow of gas through the cock 10; a second position in which the shutter member 12 determines a pre-set minimum flow of gas; and a third position in which the shutter member 12 determines a pre-set maximum flow of gas. The sequence of the positions possible for the control knob is thus: closed, minimum, and maximum. During all the stages of rotation of the shutter member 12 between the closed position and the maximum position, the elements 30 and 40 remain connected together, as illustrated in Figure 2.

In the third position, i.e., position of maximum opening, the control stem 11 stops turning, whereas the second element 40 can rotate further to cause axial sliding of the control stem 11 through the cam surfaces 35 and 45. As emerges from the view of Figure 6, arrest of the stem may, for example, be obtained by providing, inside the cap 9, a stop member 4 upon which a tooth 3, integral with the control stem 11 and projecting radially from the latter, abuts. Also visible in Figure 6 is the blind hole 2 which houses, inside the control stem 11, the valve-pressing pin 14 and the return springs 8.

Once the control stem 11 is stopped against the stop member 4, further rotation of the knob in the direction that goes from the minimum position to the maximum position causes rotation of the control shaft 41 and hence of the second element 40, whereas the first element 30, which is integral in rotation with the stem 11, remains blocked in rotation, just as the shutter member 12 likewise remains blocked in rotation.

Figure 7 illustrates a rod 80 for remote control of a device according to the present invention. The rod 80 comprises, in particular, a first end 81 on which a control knob is mounted, and a second end 82, which is connected to the control shaft 41, which is integral with second element 40.

According to a preferred aspect, the rod 80 is articulated by means of one or more joints, such as a pair of cardan joints 85, to enable remote control of the device also in the case where the axis of the knob is out of line with respect to the axis of the cock, and consequently with respect to the axis of the control shaft 41.

According to another preferred aspect, the rod 80 comprises at least two longitudinal coaxial elements 83 and 84 connected together in a telescopic way, i.e., so that they can slide with respect to one another to enable adjustment, within certain limits, of the length of the rod to the distance effectively existing between the knob and the respective control shaft 41. To block the reciprocal sliding between rod elements 83 and 84 after the overall length of the rod 80 has been regulated, means of a known type may be used, such as a screw 86 engaged in an internal thread integral with the outer rod element 83 and bearing upon the inner rod element 84 with one of its ends.

According to a possible embodiment of the invention, means are provided for preventing axial sliding of the first element 30 while it is being driven in rotation by the second element 40, as well as for enabling axial sliding of the first element 30 with respect to the second element 40 in at least one pre-set position, namely in the third position, i.e., the position of maximum gas flow.

These means, represented in greater detail in the exploded view of Figure 8, comprise at least one projection element 53 integral with the casing 50 and facing the inside of the casing to engage in an axial groove 33 on the first element 30. Also present is a groove 43 on the second element 40, which has the purpose of enabling installation of the second element 40 inside the casing 50.

When the device is operated starting from the first position, i.e., the closed position, the first element 30 is resting on the projection 53 while it is being driven in rotation by the second element 40. Once the third position has been reached, i.e., the position of maximum gas flow, the groove 33 of the first element 30 comes to be in a position where engagement of the projection 53 in the groove itself is enabled.

There then starts the relative sliding between the two cam surfaces 35 and 45, which is represented schematically in the view of Figure 5, where the grooves 33 and 43 are also visible. The second element 40 bears upon the inner surface of the casing 50 at the abutting surface 42, and since the casing is axially blocked to the body of the cock, the first element 30 is forced to translate axially downwards with respect to the arrangement illustrated in Figure 5. Along with the first element 30, also the control stem 11 translates axially, and this draws along with it the finger 21, thus operating the switch 20, as well as the valve-pressing pin 14, which moves the disk 13 of the safety valve away from the respective seal seat, whilst the shutter member 12 is stopped in rotation in the position of maximum gas flow.

In the latter position, the switch 20, operated by the finger 21, closes the circuit of the lighter device, generating, for example, a spark which gives rise to lighting of the flame, as has already been illustrated with reference to the operation of the gas cock 10 in Figure 1B. Once the gas has been lit, after the electromagnet 7 has been enabled to withhold the disk 13, the control knob can be released, and then the spring 60 brings the element 40 back into the third position, i.e., the position of maximum gas flow, freeing axially the element 30, which is brought back into the position of coupling with the element 40 (Figure 2), thanks to the action exerted by the spring 8. The element 30 then translates in the axial direction, taking along with it in an upward direction the control stem 11, the valve-pressing pin 14, and the finger 21. The circuit of the lighter device is thus deactivated, whilst the safety device remains activated.

Other embodiments of the present invention envisage means for implementing a desmodromic mechanism of axial translation between the first element and the second element.

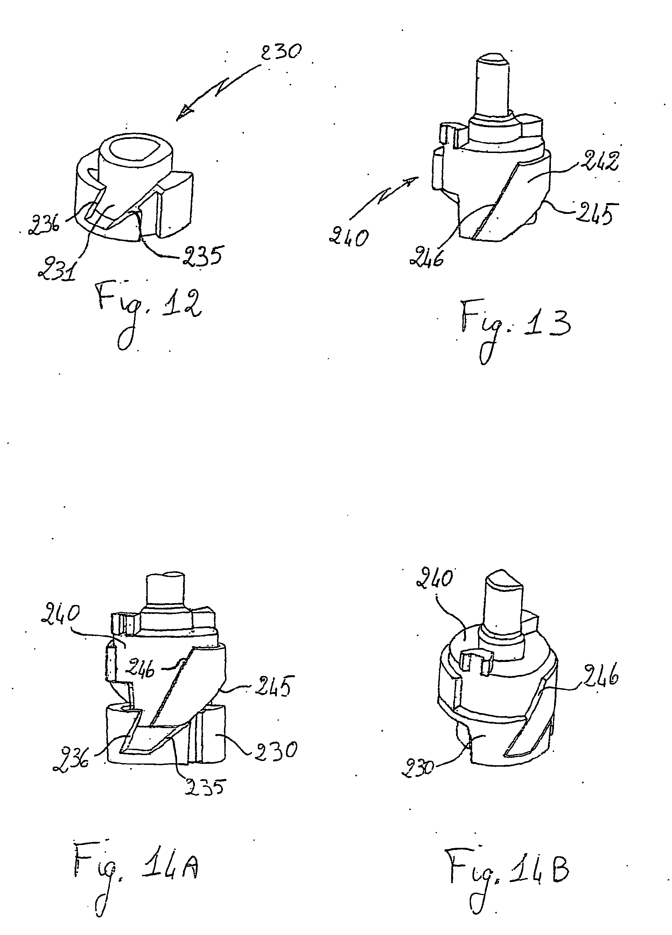

A possible embodiment of a desmodromic mechanism is illustrated in Figures 9, 10, 11A and 11B. The first element 130 of Figure 9 comprises a first cam surface 135 and a third cam surface 136 made on opposite faces of a rib 131 projecting from the element 130.

The second element 140 in Figure 10 in turn comprises at least one second cam surface 145 and one fourth cam surface 146. The latter is made on a tooth 142 and faces the inside of the second element 140, in the direction facing the cam surface 145.

Operation in the initial gas-lighting step is substantially similar to the one previously illustrated. When the cock control knob has been turned as far as the position of maximum gas flow, or anyway into the position for gas lighting, further rotation of the knob causes relative sliding between the cam surfaces 145 and 135, and hence axial translation of the first element 130 away from the second element 140, as represented in Figure 11 A.

Once the gas has been lit, the control knob can be released, and the elastic return means (e.g., the spring 60 in Figure 4) tend to bring the two elements 130 and 140 back into the position illustrated in Figure 11 B. In this case, axial translation of return of the first element 130 is guaranteed by the fourth cam surface 146 (Figure 10) which slides on the third cam surface 136. In this way, a desmodromic mechanism is obtained which enables an extreme precision of operation of the device during the gas-lighting step.

Another example of desmodromic mechanism according to the present invention is illustrated Figures 12, 13, 14A and 14B. Also in this case, each of the elements 230 and 240 comprises a pair of cam surfaces.

In particular, the first element 230 of Figure 12 comprises a first cam surface 235 and a third cam surface 236 which face one another on opposite sides of a shaped groove 231.

The second element 240 in Figure 13 in turn comprises at least one second cam surface 245 and one fourth cam surface 246 made on opposite faces of a projecting portion 242.

As was illustrated previously, when the control knob of the cock is rotated as far as the position of maximum gas flow, or anyway into the position for gas lighting, further rotation of the knob causes relative sliding between the cam surfaces 245 and 235. In this way, an axial translation is imparted on the first element 230 away from the second element 240, as represented in Figure 14A.

Once the gas has been lit, as a result of the return force exerted by the provided elastic means, the two elements 230 and 240 are brought back into the position illustrated in Figure 14B. Axial translation of return of the first element 230 is guaranteed by the fourth cam surface 246, which slides in contact with the third cam surface 236. Also the desmodromic mechanism thus obtained guarantees an extreme precision of operation of the device during gas lighting.

## Claims

1. A device for manoeuvring a cock (10) for shutting off and regulating gas in a burning apparatus, as well as for actuating an auxiliary member which controls proper operation of said burning apparatus during lighting and/or operating steps, the device comprising at least one knob for operating said cock (10) and said auxiliary member, and means for transmitting movement from said knob to said cock (10) and said auxiliary member, said movement transmission means comprise at least one first element (30; 130; 230) provided with at least one first cam surface (35; 135; 235) and at least one second element (40; 140; 240) provided with at least one second cam surface (45; 145; 245), **characterized in that** said at least one first (35; 135; 235) and at least one second (45; 145; 245) cam surfaces have conjugated and opposed profiles to enable the control stem (11) of said cock to be selectively driven in rotation or axially translated.

2. A device according to Claim 1, wherein said first element (30) is mounted on the control stem (11) of said cock (10), and wherein said at least one first cam surface (35) is set on the side opposite to the one on which said control stem (11) is mounted.

3. A device according to Claim 1, wherein said first element (30) and said second element (40) are housed in a casing (50) mounted on said cock (10), said second element (40) comprising at least one control shaft (41) projecting from said casing (50) and at least one abutting portion (42) for bearing upon the internal surface of said casing (50), and wherein said at least one second cam surface (45) is set on the side opposite to the one comprising said control shaft (41) and said abutting portion (42).

4. A device according to Claim 3, wherein means (70) are provided for blocking the axial translation movement of said casing (50) with respect to the body of said cock (10).

5. A device according to Claim 1, wherein said control stem (11) is integral in rotation with the shutter member (12) of said cock (10) and can slide with respect to said shutter member (12) during the movement of axial translation.

6. A device according to Claim 5, wherein said stem (11) may turn between a plurality of positions comprising at least one first position, in which said shutter member (12) obstructs completely the flow of gas through said cock (10), at least one second position, in which said shutter member (12) determines a pre-set minimum flow of gas, and at least one third position, in which said shutter member (12) determines a pre-set maximum flow of gas.

7. A device according to Claim 6, wherein said cock (10) comprises at least one stop member (4) for stopping rotation of said stem (11) at least when said third position is reached, and wherein further rotation of said knob beyond said third position in the direction of rotation from said second position to said third position, when said stem (11) bears upon said stop member (4), causes rotation of said second element (40) with respect to said first element (30), with the consequent relative sliding between said at least one first cam surface (35) and at least one second cam surface (45) and consequent axial movement of said control stem (11).

8. A device according to Claim 7, wherein elastic means (60) are provided to bring said knob back into said third position after said further rotation has been imparted.

9. A device according to Claim 1, **characterized by** comprising means (33, 53) for preventing axial translation of said first element (30) while the latter is driven in rotation by said second element (40), as well as for enabling axial translation of said first element (30) with respect to said second element (40) in at least one pre-set position.

10. A device according to any of the preceding claims, **characterized in that** said means (33, 53) for preventing axial translation of said first element (30) while it is driven in rotation by said second element (40), as well as for enabling axial translation of said first element (30) with respect to said second element (40) in at least one pre-set position, comprise at least one projection element (53) integral with said casing (50) and facing the inside of said casing (50), and at least one axial groove (33) in at least said first element (30), said projection element (53) and said groove (33) being set in such a way that they come into reciprocal engagement and enable axial translation of said first element (30) only when said stem (11) reaches said pre-set position.

11. A device according to Claim 1, **characterized by** comprising means (135, 136, 145, 146; 235, 236, 245, 246) for implementing a desmodromic mechanism of axial translation between said first element (130; 230) and said second element (140; 240).

12. A device according to Claim 11, **characterized in that** said means for implementing a desmodromic mechanism comprise at least one third cam surface (136; 236) set on said first element (130; 230) and at least one fourth cam surface (146; 246) set on said second element (140; 240), said third and fourth cam surfaces being set so that they can slide in contact with one another.

13. A device according to Claim 1, wherein said means for transmitting movement from said knob to said cock (10) and said auxiliary member comprise at least one rod (80) provided with an articulated joint (85) at least at one of its ends.

14. A device according to Claim 13, wherein said rod (80) comprises at least two coaxial longitudinal elements (83, 84) telescopically coupled together, and means (86) for blocking axial sliding between said at least two longitudinal elements.

15. A device according to Claim 1, wherein said auxiliary member comprises at least one spark-lighter or incandescent-lighter device associated to said burning apparatus.

16. A device according to Claim 15, wherein said lighter device comprises at least one switch (20) operated by said control stem (11) with a movement of axial translation.

17. A device according to Claim 1, wherein said auxiliary member comprises at least one safety device designed to guarantee gas flow in said cock (10) during proper operation of said burning apparatus, as well as to interrupt said flow in the case of faulty operation of said burning apparatus.

18. A device according to Claim 17, wherein said safety device comprises at least one safety valve associated to said cock (10), said valve comprising an shutter member (13) which can move in axial translation between a position in which gas flow is allowed in said cock (10) and a position in which said gas flow is interrupted.

19. A device according to Claim 18, wherein said shutter member (13) of said safety valve is operated in axial translation by means of a pin (14) under the axial thrust exerted by said stem (11) on said pin.

20. A device according to Claim 18, wherein said safety device comprises at least one electromagnet (7) for withholding said shutter member (13) in the position in which gas flow in said cock (10) is allowed, said electromagnet (7) being electrically operated under the control of a thermocouple (5) associated to said burning apparatus.

## Patentansprüche

1. Vorrichtung zum Bewegen eines Hahns (10) zum Absperren und Fiegulieren von Gas in einem Brenner sowie zum Betätigen eines Hilfselements, das den einwandfreien Betrieb des Brenners während der Schritte des Zündens und/oder Bedienens steuert, umfassend wenigstens einen Drehknopf zum Bedienen des Hahns (10) und des Hilfselements und Hilfsmittel zur Übertragung der Bewegung des Drehknopfs auf den Hahn (10) und das Hilfselement, wobei die Hilfsmittel zur Übertragung der Bewegung wenigstens ein erstes Element (30; 130; 230) umfassen, das mit wenigstens einer ersten Nockenoberfläche (35; 135; 235) versehen ist, und wenigstens ein zweites Element (40; 140; 240), das mit wenigstens einer zweiten Nockenoberfläche (45; 145; 245) versehen ist, **dadurch gekennzeichnet, dass** die wenigstens eine erste Nockenoberfläche (35; 135; 235) und die wenigstens eine zweite Nockenoberfläche (45; 145; 245) konjugierte und entgegengesetzte Profile aufweisen, so dass der Steuerzapfen (11) des Hahns selektiv in Drehung versetzt oder axial verschoben werden kann.

2. Vorrichtung nach Anspruch 1, wobei das erste Element (30) am Steuerzapfen (11) des Hahns (10) angebracht ist und die wenigstens eine erste Nockenoberfläche (35) auf der Seite angeordnet ist, die derjenigen gegenüberliegt, auf der der Steuerzapfen (11) angebracht ist.

3. Vorrichtung nach Anspruch 1, wobei das erste Element (30) und das zweite Element (40) in einem Gehäuse (50) untergebracht sind, das am Hahn (10) angebracht ist, wobei das zweite Element (40) wenigstens eine Steuerwelle (41) umfasst, die aus dem Gehäuse (50) heraus ragt, und wenigstens einen auf Stoß liegenden Teil (42) zur Einwirkung auf die Innenfläche des Gehäuses (50), und wobei die wenigstens eine zweite Nockenoberfläche (45) auf der Seite angeordnet ist, die derjenigen gegenüberliegt, welche die Steuerwelle (41) und den auf Stoß liegenden Teil (42) umfasst.

4. Vorrichtung nach Anspruch 3, wobei Hilfsmittel (70) zum Blockieren der axialen Verschiebebewegung des Gehäuses (50) bezüglich des Körpers des Hahns (10) bereitgestellt sind.

5. Vorrichtung nach Anspruch 1, wobei der Steuerzapfen (11) mit dem Verschlusselement (12) des Hahns (10) bei der Drehung eine Einheit bildet und während der axialen Verschiebebewegung bezüglich des Verschlusselements (12) gleiten kann.

6. Vorrichtung nach Anspruch 5, wobei sich der Zapfen (11) zwischen mehreren Stellungen drehen kann, umfassend wenigstens eine erste Stellung, in der das Verschlusselement (12) den Gasstrom durch den Hahn (10) völlig blockiert, wenigstens eine zweite Stellung, in der das Verschlusselement (12) einen vorgegebenen minimalen Gasstrom festlegt, und wenigstens eine dritte Stellung, in der das Verschlusselement (12) einen vorgegebenen maximalen Gasstrom festlegt.

7. Vorrichtung nach Anspruch 6, wobei der Hahn (10) wenigstens ein Anschlagelement (4) zum Anhalten der Drehung des Zapfens (11) zumindest bei Erreichen der dritten Stellung umfasst, und wobei die weitere Drehung des Drehknopfs in Drehrichtung von der zweiten Stellung in die dritte Stellung über die dritte Stellung hinaus bei Einwirkung des Zapfens (11) auf das Anschlagelement (4) eine Drehung des zweiten Elements (40) bezüglich des ersten Elements (30) mit dem daraus folgenden relativen Gleiten zwischen der wenigstens einen ersten Nockenoberfläche (35) und der wenigstens einen zweiten Nockenoberfläche (45) und der daraus folgenden axialen Bewegung des Steuerzapfens (11) bewirkt.

8. Vorrichtung nach Anspruch 7, wobei elastische Hilfsmittel (60) bereitgestellt sind, um den Drehknopf in die dritte Stellung zurück zu bringen, nachdem die weitere Drehung veranlasst wurde.

9. Vorrichtung nach Anspruch 1, **dadurch gekennzeichnet, dass** die Vorrichtung Hilfsmittel (33, 53) umfasst, um die axiale Verschiebung des ersten Elements (30) zu verhindern, während Letzteres durch das zweite Element (40) in Drehung versetzt wird, und um axiale Verschiebung des ersten Elements (30) bezüglich des zweiten Elements (40) in wenigstens einer vorgegebenen Stellung zu ermöglichen.

10. Vorrichtung nach einem der vorstehenden Ansprüche, **dadurch gekennzeichnet, dass** die Hilfsmittel (33, 53) zur Verhinderung der axialen Verschiebung des ersten Elements (30), während dieses durch das zweite Element (40) in Drehung versetzt wird, und zur Befähigung der axialen Verschiebung des ersten Elements (30) bezüglich des zweiten Elements (40) in wenigstens einer vorgegebenen Stellung wenigstens ein vorspringendes Element (53) umfassen, das mit dem Gehäuse (50) eine Einheit bildet und dem Innem des Gehäuses (50) zugewandt ist, und wenigstens eine axiale Kerbe (33) in wenigstens dem ersten Element (30), wobei das vorspringende Element (53) und die Kerbe (33) so angeordnet sind, dass sie ineinander eingreifen und die axiale Verschiebung des ersten Elements (30) erst dann ermöglichen, wenn der Zapfen (11) seine vorgegebene Stellung erreicht.

11. Vorrichtung nach Anspruch 1, **dadurch gekennzeichnet, dass** die Vorrichtung Hilfsmittel (135, 136, 145, 146; 235, 236, 245, 246) zur Umsetzung eines desmodromischen Mechanismus der axialen Verschiebung zwischen dem ersten Element (130; 230) und dem zweiten Element (140; 240) umfasst.

12. Vorrichtung nach Anspruch 11, **dadurch gekennzeichnet, dass** die Hilfsmittel zur Umsetzung eines desmodromischen Mechanismus wenigstens eine dritte Nockenoberfläche (136; 236), die am ersten Element (130; 230) angeordnet ist, und wenigstens eine vierte Nockenoberfläche (146; 246), die am zweiten Element (140; 240) angeordnet ist, umfassen, wobei die dritte Nockenoberfläche und die vierte Nockenoberfläche so angeordnet sind, dass sie in Kontakt miteinander gleiten können.

13. Vorrichtung nach Anspruch 1, wobei die Hilfsmittel zur Übertragung der Bewegung vom Drehknopf auf den Hahn (10) und das Hilfselement wenigstens einen Stab (80) umfassen, der an wenigstens einem seiner Enden mit einem Gliedergelenk (85) versehen ist.

14. Vorrichtung nach Anspruch 13, wobei der Stab (80) wenigstens zwei coaxiale Längselemente (83, 84), die teleskopartig miteinander verbunden sind, und Hilfsmittel (86) zum Blockieren des axialen Gleitens zwischen den wenigstens zwei Längselementen umfasst.

15. Vorrichtung nach Anspruch 1, wobei das Hilfselement wenigstens eine Funkenzünd- oder Glühzündvorrichtung umfasst, die mit dem Brenner verbunden ist.

16. Vorrichtung nach Anspruch 15, wobei die Zündvorrichtung wenigstens einen Schalter (20) umfasst, der durch den Steuerzapfen (11) mit einer axialen Verschiebebewegung betätigt wird.

17. Vorrichtung nach Anspruch 1, wobei das Hilfselement wenigstens eine Sicherheitsvorrichtung umfasst, die den Gasfluss im Hahn (10) bei einwandfreiem Betrieb des Brenners sicherstellen und den Fluss im Falle fehlerhaften Betriebs des Brenners unterbrechen soll.

18. Vorrichtung nach Anspruch 17, wobei die Sicherheitsvorrichtung wenigstens ein Sicherheitsventil umfasst, das mit dem Hahn (10) verbunden ist, wobei das Ventil ein Verschlusselement (13) umfasst, das sich in axialer Verschiebung zwischen einer Stellung, in welcher der Gasfluss im Hahn (10) möglich Ist, und einer Stellung, in welcher der Gasfluss unterbrochen ist, bewegen kann.

19. Vorrichtung nach Anspruch 18, wobei das Verschlusselement (13) des Sicherheitsventils in axialer Verschiebung mit Hilfe eines Stifts (14) unter dem vom Zapfen (11) auf den Stift ausgeübten axialen Schub betätigt wird.

20. Vorrichtung nach Anspruch 18, wobei die Sicherheitsvorrichtung wenigstens einen Elektromagnet (7) umfasst, um das Verschlusselement (13) in der Stellung zu halten, in der das Gas im Hahn (10) strömen kann, wobei der Elektromagnet (7) unter der Steuerung eines mit dem Brenner verbundenen Thermoelements (5) elektrisch betätigt wird.

## Revendications

1. Dispositif pour manoeuvrer un robinet (10) de fermeture et de régulation de gaz dans un appareil de combustion, ainsi que pour actionner un élément auxiliaire qui commande le bon fonctionnement dudit appareil de combustion pendant les phases d'allumage et/ou de fonctionnement, le dispositif comprenant au moins un bouton pour actionner ledit robinet (10) et ledit élément auxiliaire, et des moyens pour transmettre le mouvement depuis ledit bouton audit robinet (10) et audit élément auxiliaire, lesdits moyens de transmission de mouvement comprenant au moins un premier élément (30 ; 130 ; 230) comportant au moins une première surface de came (35 ; 135 ; 235) et au moins un second élément (40 ; 140 ; 240) comportant au moins une seconde surface de came (45 ; 145 ; 245), **caractérisé en ce que** lesdites au moins une première (35 ; 135 ; 235) et au moins une seconde (45 ; 145 ; 245) surfaces de came présentent des profils conjugués et opposés afin de permettre d'entraîner de manière sélective la tige de manoeuvre (11) en rotation ou en translation axiale.

2. Dispositif selon la revendication 1, dans lequel ledit premier élément (30) est monté sur la tige de manoeuvre (11) dudit robinet (10), et dans lequel ladite au moins une première surface de came (35) est ménagée sur la face opposée à celle sur laquelle est montée ladite tige de manoeuvre (11).

3. Dispositif selon la revendication 1, dans lequel ledit premier élément (30) et ledit second élément (40) sont montés dans un carter (50) monté sur ledit robinet (10), ledit second élément (40) comprenant au moins un axe de manoeuvre (41) faisant saillie par rapport audit carter (50) et au moins une partie de butée (42) qui prend appui sur la surface intérieure dudit carter (50), et dans lequel au moins une seconde surface de came (45) est ménagée sur la face opposée à celle comprenant l'arbre de manoeuvre (41) et la partie de butée (42).

4. Dispositif selon la revendication 3, dans lequel des moyens (70) sont prévus pour empêcher le mouvement de translation axiale dudit carter (50) par rapport au corps dudit robinet (10).

5. Dispositif selon la revendication 1, dans lequel ladite tige de manoeuvre (11) est solidaire en rotation avec l'élément d'obturation (12) dudit robinet (10) et peut coulisser par rapport audit élément d'obturation (12) pendant le mouvement de translation axiale.

6. Dispositif selon la revendication 5, dans lequel ladite tige (11) peut tourner entre une pluralité de positions comprenant au moins une première position, dans laquelle ledit élément d'obturation (12) obture complètement l'écoulement de gaz à travers le robinet (10), au moins une seconde position, dans laquelle ledit élément d'obturation (12) règle un écoulement minimum prédéfini de gaz, et au moins une troisième position, dans laquelle ledit élément d'obturation (12) règle un écoulement maximum prédéfini de gaz.

7. Dispositif selon la revendication 6, dans lequel ledit robinet (10) comprend au moins un élément d'arrêt (4) pour stopper la rotation de ladite tige (11) au moins lorsque ladite troisième position est atteinte, et dans lequel une rotation supplémentaire dudit bouton au-delà de ladite troisième position dans le sens de rotation de ladite seconde position vers ladite troisième position, lorsque ladite tige (11) prend appui sur ledit élément d'arrêt (4), entraîne la rotation dudit second élément (40) par rapport audit premier élément (30), avec le coulissement relatif résultant entre ladite au moins une première surface de came (35) et au moins une seconde surface de came (45) et le mouvement axial résultant de ladite tige de manoeuvre (11).

8. Dispositif selon la revendication 7, dans lequel des moyens élastiques (60) sont prévus pour ramener ledit bouton dans ladite troisième position après que ladite rotation supplémentaire ait été exercée.

9. Dispositif selon la revendication 1, **caractérisé en ce qu'**il comprend des moyens (33, 53) pour empêcher la translation axiale dudit premier élément (30) pendant que ce dernier est entraîné en rotation par ledit second élément (40), ainsi que pour permettre une translation axiale dudit premier élément (30) par rapport audit second élément (40) dans au moins une position prédéfinie.

10. Dispositif selon l'une quelconque des revendications précédentes, **caractérisé en ce que** lesdits moyens (33, 53) pour empêcher une translation axiale dudit premier élément (30) pendant que ce dernier est entraîné en rotation par ledit second élément (40), ainsi que pour permettre une translation axiale dudit premier élément (30) par rapport audit second élément (40) dans au moins une position prédéfinie, comprennent au moins un élément faisant saillie (53) solidaire dudit carter (50) et orienté vers l'intérieur dudit carter (50), et au moins une rainure axiale (33) dans au moins ledit premier élément (30), ledit élément faisant saillie (53) et ladite rainure (33) étant prévus de telle sorte qu'ils viennent en prise réciproque et ne permettent une translation axiale dudit premier élément (30) que lorsque ladite tige (11) atteint ladite position prédéfinie.

11. Dispositif selon la revendication 1, **caractérisé en ce qu'**il comprend des moyens (135, 136, 145, 146 ; 235, 236, 245, 246) pour mettre en oeuvre un mécanisme desmodromique de translation axiale entre ledit premier élément (130 ; 230) et ledit second élément (140 ; 240).

12. Dispositif selon la revendication 11, **caractérisé en ce que** lesdits moyens pour mettre en oeuvre un mécanisme desmodromique comprennent au moins une troisième surface de came (136 ; 236) ménagée sur ledit premier élément (130 ; 230) et au moins une quatrième surface de came (146 ; 246) ménagée sur ledit second élément (140 ; 240), lesdites troisième et quatrième surfaces de came étant ménagées de sorte à pouvoir être en contact glissant l'une avec l'autre.

13. Dispositif selon la revendication 1, dans lequel lesdits moyens pour transmettre le mouvement depuis ledit bouton audit robinet (10) et audit élément auxiliaire comprennent au moins une tige (80) pourvue d'un joint articulé (85) au moins à une de ses extrémités.

14. Dispositif selon la revendication 13, dans lequel ladite tige (80) comprend au moins deux éléments longitudinaux coaxiaux (83, 84) couplés ensemble de façon télescopique, et des moyens (86) pour bloquer le coulissement axial entre lesdits au moins deux éléments longitudinaux.

15. Dispositif selon la revendication 1, dans lequel ledit élément auxiliaire comprend au moins un moyen d'allumage à étincelles ou un moyen d'allumage par incandescence associé audit appareil de combustion.

16. Dispositif selon la revendication 15, dans lequel ledit moyen d'allumage comprend au moins un commutateur (20) actionné par ladite tige de manoeuvre (11) suivant un mouvement de translation axiale.

17. Dispositif selon la revendication 1, dans lequel ledit élément auxiliaire comprend au moins un dispositif de sécurité prévu pour garantir un écoulement de gaz dans ledit robinet (10) pendant le fonctionnement normal dudit appareil de combustion, ainsi que pour interrompre ledit écoulement en cas de fonctionnement défectueux dudit appareil de combustion.

18. Dispositif selon la revendication 17, dans lequel ledit dispositif de sécurité comprend au moins une valve de sécurité associée audit robinet (10), ladite valve comprenant un élément d'obturation (13) qui peut se déplacer en translation axiale entre une position dans laquelle l'écoulement de gaz est permis dans ledit robinet (10) et une position dans laquelle ledit écoulement de gaz est interrompu.

19. Dispositif selon la revendication 18, dans lequel ledit élément d'obturation (13) de ladite valve de sécurité est actionné en translation axiale au moyen d'une broche (14) sous la poussée axiale exercée par ladite tige (11) sur ladite broche.

20. Dispositif selon la revendication 18, dans lequel ledit dispositif de sécurité comprend au moins un électroaimant (7) pour retenir ledit élément d'obturation (13) dans la position dans laquelle l'écoulement de gaz dans ledit robinet (10) est permis, ledit électroaimant (7) étant actionné électriquement sous la commande d'un thermocouple (5) associé audit appareil de combustion.
